# EUROPEAN PATENT SPECIFICATION

(11) **EP 2 765 069 B1**
(45) Date of publication and mention of the grant of the patent: **22.04.2020**
(21) Application number: 13154401.7
(22) Date of filing: 07.02.2013
(51) Int. Cl.: B62J 37/00, F02M 25/08

(54) **Straddle-type vehicle comprising a canister**
Kanister
Réservoir

(43) Date of publication of application: 13.08.2014
(73) Proprietor: YAMAHA MOTOR CO., LTD., Iwata-shi Shizuoka 438-8501 (JP)
(72) Inventor: Rocco, Fiorina, Iwata, Shizuoka 438-8501 (JP)
(74) Representative: Grünecker Patent- und Rechtsanwälte PartG mbB

(56) References cited:
- EP-A1- 2 371 694
- EP-A1- 2 397 396
- EP-A2- 1 296 036
- US-A1- 2010 243 354
- US-A1- 2012 193 164

## Description

The present invention relates to a straddle-type vehicle having an internal combustion engine and a fuel tank for storing fuel, wherein the fuel is supplied to the engine. Prior art document EP 2 397 396 A1, which is considered as the closest prior art for claim 1, discloses a straddle-type vehicle having a canister device for a motorcycle, wherein a fuel tank is arranged above an engine. Said engine is provided with a cylinder assembly and a canister is arranged close to the engine directly behind said cylinder assembly.

In a straddle-type vehicle, a fuel tank is provided for storing fuel, in order to supply said fuel for running said engine. In general, such a fuel tank is not completely filled with fuel so that liquid fuel and fuel vapour is accommodated within the fuel tank. Such fuel vapour cannot be supplied to the engine by means of a supplying system being configured to supply liquid fuel, and it is also not suitable and not allowed to simply exhaust such fuel vapour to the atmosphere. Hence, fuel evaporation gas emission suppressing devices have been developed which use activated carbon provided within a housing, commonly referred to as a canister. Such a canister is connected to an upper part of the fuel tank by means of a pipe, in order to receive fuel vapour from the fuel tank. The fuel vapour is taken by the activated carbon. In order to release the fuel vapour being absorbed by the activated carbon, it is more liable to warm up the canister so that the fuel vapour is guided by means of a further fuel pipe to an intake section of the engine, as for example, to the carburettor so that the fuel vapour would be mixed with air and burned within the engine.

Prior art document EP2258938 A1 teaches a straddle-type vehicle embodied as a motorcycle, with an engine and a fuel tank arranged above the engine, wherein a canister connected to the fuel tank and the throttle body of the carburettor of the engine is arranged between the fuel tank and the cylinder head. With such arrangement, heat of the engine can be used to warm up the canister, and the exposed arrangement allows cooling of the canister when the engine is not running.

Further prior art document US 2010/0243353 A1 discloses a scooter-type vehicle with an engine arranged under the seat, wherein a fuel tank is arranged in front of said engine. Between said engine and the fuel tank, a storage box is arranged under the seat. Said engine is connected with a radiator being arranged in front of the fuel tank. Within a forward recess of said fuel tank a canister is provided that is connected to the fuel tank and the engine. When running the vehicle, air being heated by the radiator is guided toward said canister in order to warm up the same so that fuel vapour release is promoted. With such arrangement, the canister can be heated up by using heat of the engine cooling system, and the canister can also easily cool down when the engine has been stopped.

The prior art document US 2012/193164 A1 refers to a saddle seat type vehicle with a canister being attached to an upper rear wall of the fuel tank. Said canister is arranged in front of the engine.

The prior art document US 2010/0243354 A1 refers to an evaporated fuel treatment apparatus in a motorcycle, wherein a canister is arranged above a fuel tank and in front of an engine.

The prior art document EP 2 371 694 A1 refers to a straddle-type vehicle with a canister directly above of an engine and below a helmet compartment or storage box.

The prior art document EP 1 296 036 A2 is directed to a motorcycle having an internal combustion engine and a canister in a front part of the vehicle, especially in front of the engine unit. Said canister is also arranged in front of the fuel tank. The engine unit comprises the engine and a transmission unit.

In view of the known embodiments discussed within the prior art, it is an object of the present invention to provide a saddle-type vehicle having an engine and a fuel tank, as well as a canister, wherein suitable operation is ensured by a simple and compact structure.

According to the present invention said object is solved by a Straddle-type vehicle having the features of independent claim 1. Preferred embodiments are laid down in the dependent claims.

Accordingly, it is provided a straddle-type vehicle comprising: an engine, a fuel tank, and a canister being connected with the fuel tank and the engine, said engine is arranged under a seat of the vehicle, wherein said canister is facing the engine, and an outer surface of said canister is covered in a forward and/or upward direction of the straddle-type vehicle. With such arrangement, performance of the canister can be improved by ensuring sufficient warm-up and preventing undesired cool-down of the canister. Said straddle-type vehicle provides a compact structure.

In the straddle-type vehicle, said outer surface of the canister is covered in a forward direction of the vehicle by means of the fuel tank.

Preferably, in the straddle-type vehicle, said outer surface of the canister is facing a rear wall of the fuel tank.

Preferably, in the straddle-type vehicle, said canister is arranged above a bottom edge of the rear wall of the fuel tank.

According to a preferred embodiment said engine comprises a cylinder head directed in a forward direction of the vehicle and facing the rear wall of the fuel tank.

Preferably, in the straddle-type vehicle, the cylinder head of the engine, the fuel tank, and the canister are cover by a body cover.

According to preferred embodiments said canister has a cylindrical shape with a cylindrical outer surface, part of said cylindrical outer surface is covered and part of said cylindrical outer surface is facing the engine.

Preferably, in the straddle-type vehicle, a longitudinal axis of the canister extends in an up and down direction of the vehicle, and preferably said longitudinal axis of the canister is inclined to a vertical direction of the straddle-type vehicle within a range of 0 to 45 deg, with an upper part of the canister directed to the forward direction of the straddle-type vehicle.

According to preferred embodiments a body frame is provided for supporting the engine, the fuel tank and the seat, said body frame comprises left and right frame sections extending in the longitudinal direction of the straddle-type vehicle and the fuel tank, wherein the canister is arranged between said left and right frame sections.

Preferably, in the straddle-type vehicle, the canister is fixed to one of said left and right frame sections.

Preferably, in the straddle-type vehicle, the engine and/or the fuel tank is arranged between said left and right frame sections.

According to preferred embodiments a storage box is arranged between the seat and the engine, said storage box is arranged above the canister.

According to preferred embodiments the canister and the engine are overlapping in side view of the straddle-type vehicle.

Preferably, the canister is arranged between the engine and a side cover in side view of the straddle-type vehicle.

According to preferred embodiments a first pipe is connecting the fuel tank and the canister, and a second pipe is connecting the canister and an intake section if the engine.

Preferably, in the straddle-type vehicle, the first and second pipes are connected to an upper surface of the canister.

Hereinafter, the present invention is illustrated and explained by means of a preferred embodiment, in conjunction with the accompanying drawings. In the drawings, wherein:
- Fig. 1a: is a side view of the straddle-type vehicle according to an embodiment, wherein respective elements are covered by cover means,
- Fig. 1b: is a side view of the straddle-type vehicle according to the embodiment, wherein cover means and several elements have been removed so that the body frame and main components are visible,
- Fig. 1c: is a sectional side view of the straddle-type vehicle according to the embodiment, wherein side view arrangement of elements is visible without illustration of the body frame,
- Fig. 2a: is a plan view from the top of a central section of the vehicle, wherein the view to the engine and the fuel tank as well as the body frame is free,
- Fig. 2b: is a plan view from the top of the central section of the vehicle illustrating the storage box, wherein the bottom section is partly cut in order to illustrate the canister,

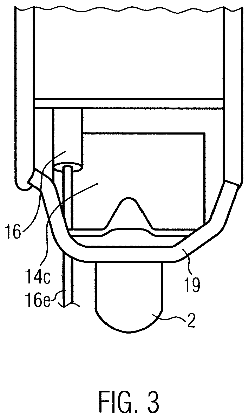

- Fig. 3: is a sectional rear view of the vehicle without illustrating the engine and the rear wheel.

Within the description, the elements are indicated in that:

| | |
|---|---|
| straddle-type vehicle | 1 |
| front wheel | 2 |
| rear wheel | 3 |
| body frame | 4 |
| main seat | 5 |
| assist seat | 6 |
| front fork | 7 |
| head pipe | 8 |
| lower down-tube | 9 |
| left and right lower down-tube section | 9a, 9b |
| upper down-tube | 10 |
| left and right upper down-tube section | 10a, 10b |
| left and right side middle frame sections | 11a, 11b |
| left and right upper tubes | 12a, 12b |
| left and right lower tubes | 13a, 13b |
| the fuel tank | 14 |
| rear wall of the fuel tank | 14a |
| bottom edge of the rear wall of the fuel tank | 14b |
| heat protection plate | 14c |
| fuel supply pipe | 14d |
| engine | 15 |
| cylinder section of the engine | 15a |
| cylinder head of the engine | 15b |
| canister | 16 |
| cylindrical outer surface of the canister | 16a |
| longitudinal axis of the canister | 16b |
| first fuel vapour pipe | 16c |
| second fuel vapour pipe | 16d |
| vent pipe | 16e |
| swinging-type drive unit | 17 |
| suspension means | 18 |
| cross tube | 19 |
| cover means | 20 |
| cover body | 21 |
| headlight section | 22 |
| windshield | 23 |
| radiator | 24 |
| storage box | 25 |
| throttle body | 26 |
| air intake duct | 27 |

For the straddle-type vehicle "forward direction", "rearward direction", "left", "right", "up" and "down" are commonly defined with regard to the normal driving direction of the vehicle.

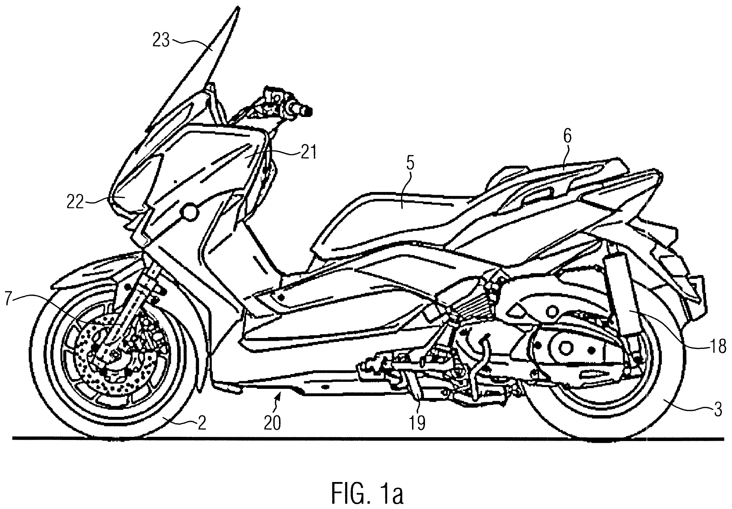

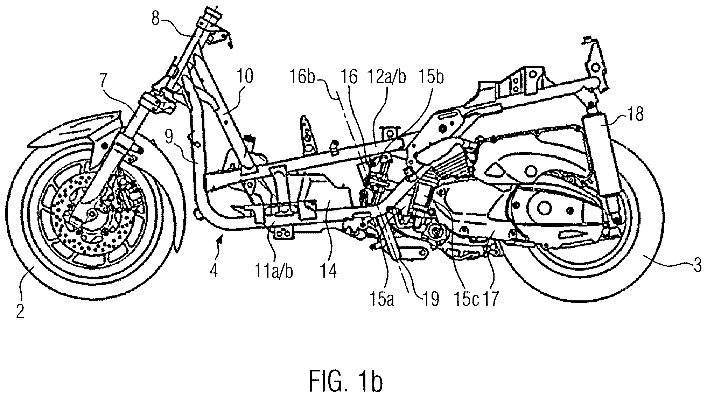

The straddle-type vehicle 1 as illustrated within Figure 1a is embodied as a scooter-type vehicle having a front wheel 2, a rear wheel 3 and a main seat 5 for a driver. On a rear section of the main seat, an assist seat 6 for a co-rider is arranged directly above the rear wheel 3. The rear wheel 3 is supported on a body frame with a suspension means 18 and a swinging-type drive unit 17 being rotatable around a pivot support bearing of the body frame. As illustrated within Figure 1b, said swinging-type drive unit 17 comprises an engine 15 and a transmission. The swinging-type drive unit 17 drives the rear wheel 3, in order to drive the vehicle 1. The front wheel 2 is supported by a front fork 7, wherein said front fork 7 is rotatably supported within a head pipe 8 of the body frame 4. A handle is attached to said front fork 7, in order to rotate the same within the head pipe 8.

According to the specific arrangement, the body frame 4, a fuel tank 14 and the engine 15 are covered by cover means 20. In particular, such a cover means 20 is constituted by several cover bodies which are attached to each other and are supported on the body frame. The preferred embodiment is equipped with an engine of the water-cooled type so that a radiator 24 is provided for cooling the engine 15. In particular, said radiator 24 is arranged in front of the fuel tank 14 and is exposed in a forward direction to the wind when the vehicle drives in said forward direction. According to the preferred embodiment, the head pipe 8 and the upper part of the front fork 7 are covered by a cover body 21. In particular, that cover body comprises a headlight section 22 and a windshield 23 and also supports an instrument panel.

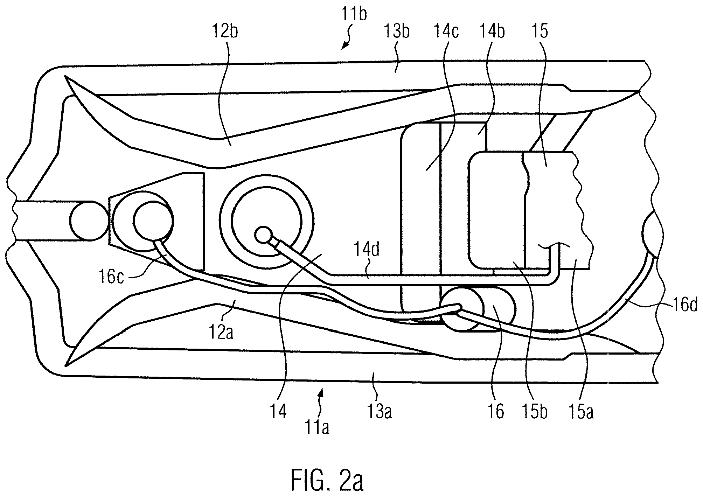

From a lower part of the head pipe 8, a lower down-tube 9 extends downwardly and splits up in a left and a right lower down-tube section 9a, 9b. From an upper part of the head pipe 8, an upper down-tube 10 extends downwardly and splits up in a left and a right upper down-tube section 10a, 10b. The body frame 4 further comprises left and right side middle frame sections 11a, 11b extending in a longitudinal direction of the vehicle. In particular, as can be seen in Figures 1b and 2a, the middle frame sections 11a, 11b comprise left and right upper tubes 12a, 12b connected with the left and right upper down-tube sections 10a, 10b respectively, as well as comprising left and right lower tubes 13a, 13b connected with the left and right lower down-tube sections 9a, 9b respectively. According to the preferred embodiment, and illustrated in Figure 1b, the left and right lower tubes 13a, 13b are connected with each other by means of a cross tube 19, which extends in a width direction of the vehicle. In particular, said cross tube 19 is arranged in the vicinity of the engine 15 and constitutes the lowest part of the body frame, so that said cross tube 19 also functions as a protection means for said engine 15.

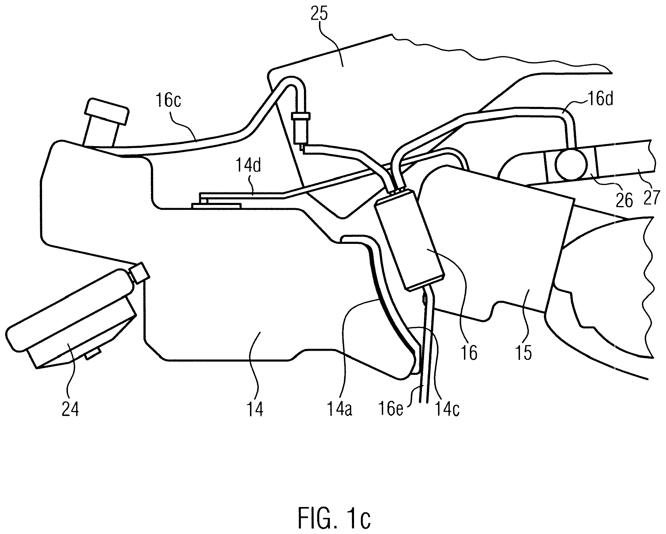

As can be taken from Figures 1b and 1c, the fuel tank 14, the engine 15 and a canister 16 are arranged between said tubes 12a, 12b, 13a, 13b of the middle frame sections 11a, 11b. A fuel supply pipe 14d is provided to supply fuel stored in the fuel tank 14 to the engine 15. The fuel tank 14, the engine 15, and the canister 16 are arranged on substantially the same horizontal level under the main seat 5. In particular, the engine 15 is arranged directly below a rear part of the main seat 5 and the rear end of the fuel tank 14 is arranged directly below the front end of the main seat 5.

Said engine 15 comprises a cylinder section 15a and a cylinder head 15b extending in a forward direction of the vehicle 1, as well as a crankcase 15c extending in a rearward direction of the vehicle and connected with the transmission of the drive unit 17. A throttle body 26 is arranged within an air intake duct 27. Said air intake duct is provided to supply fresh air taken via an air cleaner to the engine 15. Said throttle body 26 comprises a throttle valve in order to control air flow to the engine. Said cylinder head 15b is directly facing a rear wall 14a of the fuel tank 14 as illustrated within Figures 1b, 1c and 2a. Said rear wall 14a is covered by a heat protection plate 14c in order to prevent heat of the engine 15 being transmitted into the fuel tank 14. According to said arrangement, the free space is provided between the cylinder head 15b and the rear wall 14a being covered by the heat protection plate 14c of the fuel tank 14. In consideration of the swinging motion of the cylinder head 15b of the swinging-type drive unit 17, the rear wall 14a of the fuel tank 14 has an arc shape in the side view, as can be taken from Figure 1c. In particular, said arc of the rear wall of the fuel tank is concentric with the pivot support bearing of the swinging-type drive unit 17.

The canister 16 is arranged behind the fuel tank 14 and faces the cylinder head 15b. According to said configuration, free space is provided between the canister 16 and the cylinder head 15b of the engine 15. Within said space, no further element is provided between the canister 16 and the engine 15, so that the canister 16 is directly exposed to said cylinder head 15b.

The canister 16 is connected with the fuel tank 14 by means of a first fuel vapour pipe 16c. Said first fuel vapour pipe 16c is connected with the fuel tank 14 at an upper section thereof close to the filler port. Said first fuel vapour pipe 16c supplies fuel vapour from the fuel tank 14 to the canister 16. Said first fuel vapour pipe 16c is connected with the canister 16 at an upper section thereof. The fuel vapour is taken by activated carbon in the canister 16. The fuel vapour is guided by means of a second fuel vapour pipe 16d to an intake section of the engine. According to the embodiment, the second fuel vapour pipe 16d is connected with the throttle body 26. Said second fuel vapour pipe 16d is connected with the canister 16 at an upper section thereof. According to the embodiment the canister 16 is connected to an upper part of the fuel tank 14 by means of a pipe 16c, in order to receive fuel vapour from the fuel tank 14. The fuel vapour is taken by the activated carbon. In order to release the fuel vapour being absorbed by the activated carbon, the canister 16 is warmed up and the fuel vapour is guided by means of a further fuel pipe 16d to an intake section 26 of the engine 15. The fuel vapour would be mixed with air and burned within the engine. Alternatively to the illustrated embodiment, the fuel vapour is directly guided to a carburettor so that the fuel vapour would be mixed with air and fuel, and burned within the engine. In order to compensate for pressure difference in the canister 16 a vent pipe 16e is provided. Said vent pipe 16e is open to atmosphere and connected to a bottom section of the canister 16.

According to the embodiment, the canister 16 has a cylindrical shape and part of the cylindrical outer surface 16a is facing the cylinder head 15b. Accordingly, at least a part of the canister 16 is exposed to the cylinder head 15b of the engine 15 and receives heat of said engine, without any further protection means arranged therein between. Such arrangement allows to warm up the canister 16 by the heat transmitted from the cylinder head 15b. in order to prevent undesired cooling of the canister 16, the fuel tank 14 serves as some kind of cover means, so that an outer surface of the canister 16 is covered in a forward direction, in order to prevent wind applied to the canister 16.

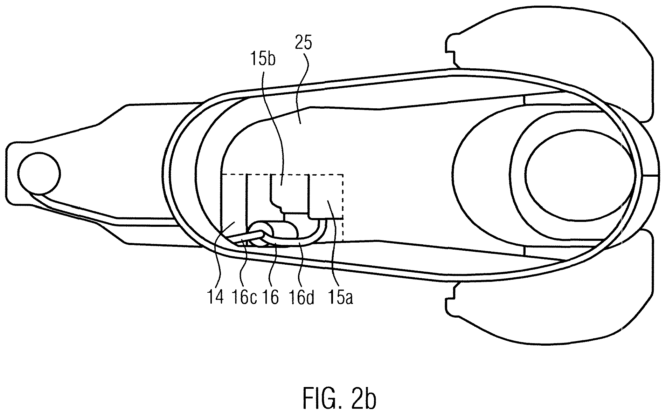

According to the embodiment, a storage box 25 is arranged under the main seat 5 and the assist seat 6, said storage box 25 can be opened from the above. For opening the storage box 25 the seat is removed or pivoted. As illustrated in Figs. 1c and 2b, the front part of the storage box 25 is arranged under the main seat 5 and above the engine 15 as well as above the rear part of the fuel tank 14. Accordingly, said part of the storage box is also arranged above the canister 16 so that the arrangement space of the canister 16 is also restricted by means of a bottom section of the storage box 25.

According to the embodiment, the lower part of the canister 16 is arranged directly above a bottom edge 14b of the rear wall 14a of the fuel tank 14, and a longitudinal axis 16b of the canister 16 extends in an up and down direction of the vehicle. Said longitudinal axis 16b of the canister 16 is inclined to a vertical direction of the straddle-type vehicle, so that said canister 16 is inclined to a forward direction, as illustrated in Figure 1c. In particular, said longitudinal axis 16b of the canister 16 is inclined within a range of 0 to 45 degrees in the forward direction, with an upper part of the canister 16 directed to said forward direction of the vehicle. According to the preferred embodiment, the cross tube 19 has a U-shape configuration, wherein the respective connecting sections are arranged parallel with regard to the longitudinal axis 16b of the canister 16, as clearly illustrated by Figure 1b. Hence, said cross frame 19 also functions as a protection means for the lower part of the canister 16.

According to the embodiment, said longitudinal axis 16b of the canister 16 extends substantially parallel to a tangential line of the mid part of the arc shape rear wall 14a of the fuel tank 14, so that space between the canister 16 and the fuel tank 14 can be equalized and made small to ensure compact structure.

As can be taken from Figure 2a, the canister 16 is arranged on the left side of the cylinder head 15b and is fixed to the left side middle frame section 11a. Alternatively, the canister may be arranged on the opposing right side and attached to the right side middle frame section.

According to a further embodiment (not illustrated), the canister is fixed to the fuel tank in order to provide a fuel tank canister unit. Such unit can be easily mounted by attaching the fuel tank to the body frame.

According to the above mentioned embodiments, the canister is not moving with regard to the body frame. According to a further embodiment (not illustrated), the canister is attached to the swinging-type drive unit and moves together with said unit so that no relative motion between the canister and the cylinder head would occur.

Within the straddle-type vehicle, the illustrated left and right side middle frame sections 11a, 11b, the fuel tank 14, the canister 16 and the engine 15 are covered by a cover body. Hence, the respective elements are additionally protected.

Moreover, the storage box 25 is arranged between the engine 15 and the seat, in particular the main seat 5, so that said storage box is also arranged above the canister 16 and the rear wall 14a of the fuel tank 14.

As illustrated in Fig. 1c, the radiator 24 is arranged in front of the fuel tank 14. Said radiator 24 is inclined with regard to the vertical direction of the vehicle and faces in downward direction. Furthermore, as can be taken from Fig. 1c, the canister 16 is arranged behind the fuel tank 14 and below the storage box 25 and faces the cylinder head 15b of the engine 15. In consideration of Fig. 1a, a side cover is provided so that the side view of the canister 16 and the engine 15 as well as of the fuel tank 14 and the storage box 25 is covered and the free space for arrangement of the canister 16 would be defined by said side cover, the rear wall of the fuel tank 14a, the cylinder head 15b of the engine, as well as the bottom surface of the storage box 25.

The cover means also provides a center tunnel that extends from the radiator 24 to the rear side in order to provide heated air to the canister 16, said heated air also flows around the canister 16 in order to heat same up.

With the arrangement as discussed above, the canister 16 is arranged in free space between the engine 15, especially the cylinder section 15a and the cylinder head 15b, the related (adjacent) side frame and the fuel tank 14. Such arrangement allows the warm-up of the canister 16 by means of heat transmitted to the canister 16 when the engine 15 is running. Undesired cool-down of the canister 16 by wind during driving of the vehicle can be prevented, or at least reduced, by means of the covering of the canister 16 in the forward direction using the fuel tank 14. Furthermore, warm air surrounding the cylinder section 15a and the cylinder head 15b of the engine 15 would flow in an upward direction. However, said warm air flow is blocked by means of the storage box 25 and kept to directly apply to the canister 16 so that warm up of the canister 16 can be further promoted.

According to the preferred embodiment, the canister 16 is arranged within a free space which is directly heated by means of the engine 15, especially heat that is applied by means of the cylinder head 15b of said engine 15. In addition thereto, warm air from the radiator 24 is routed through said free space so that heat up of the canister 16 is further promoted. In order to prevent undesired cool down of the canister 16, wind is blocked by means of the fuel tank 14 which is arranged in front of the canister 16 with regard to driving direction. In consideration of width direction of the vehicle, one side of the free space for arrangement of the canister 16 is restricted by means of the engine 15, wherein the opposing side of said free space is restricted by means of the side cover. Moreover, said free space for arrangement of the canister 16 is also restricted by a bottom section of the storage box 25 so that warm air which would normally flow in upward direction is kept within said free space.

According to the embodiment, a straddle-type vehicle is provided comprising: an engine 15, a fuel tank 14 and a canister 16 being connected with the fuel tank 14 and the engine 15. Said engine 15 is arranged under a seat 5 of the vehicle, wherein said canister 16 is facing the engine 15. An outer surface 16a of said canister 16 is covered in a forward direction of the straddle-type vehicle. With such arrangement, performance of the canister can be improved by ensuring sufficient warm-up and preventing undesired cool-down of the canister 16.

According to the preferred embodiment, the outer surface 16a of the canister 16 is also covered in upward direction so that warm air is kept within the free space and the canister 16 is warmed up to promote the function thereof.

Said outer surface 16a of the canister 16 is covered in a forward direction of the vehicle by means of the fuel tank 14. Accordingly, the canister 16 is arranged close to the engine 15 as well as the fuel tank 14. Hence, the entire arrangement comprises a compact structure without need of further elements and ensures a short connection between the canister 16 and the fuel tank 14, and between the canister 16 and the engine 15.

Said outer surface 16a of the canister 16 is facing a rear wall 14a of the fuel tank 14. According to said arrangement, only a small space is provided between the outer surface 16a of the canister and the rear wall 14a of the fuel tank 14. According to the preferred embodiment, only the heat protection plate 14c is arranged between the outer surface 16a of the canister 16 and said rear wall 14a of the fuel tank 14. Said heat protection plate 14c is in the same arc-shape as the rear wall 14a of the fuel tank 14.

Said canister 16 is arranged above a bottom edge 14b of the rear wall 14a of the fuel tank 14. Said arrangement ensures sufficient covering of the canister 16, especially with regard to the wind that blows under the vehicle. In particular, such arrangement does not directly require a cover on the bottom section of the vehicle.

Said engine 15 comprises a cylinder head 15b directed in a forward direction of the vehicle and facing the rear wall 14a of the fuel tank 14. With such an arrangement, the centre of gravity can be set relatively low and a compact structure can be ensured.

The cylinder head of the engine 15, the fuel tank 14 and the canister 16 are cover by a body cover. Such cover body can protect the respective elements and also promotes the warm-up of the canister by means of the heat of the engine.

Said canister 16 has a cylindrical shape with a cylindrical outer surface 16a. Part of said cylindrical outer surface 16a is covered and part of said cylindrical outer surface 16a is facing the engine 15. With such configuration, the canister will be warmed up by means of the heat from the engine 15 being applied to a part of the cylindrical outer surface 16a, and undesired cooling of another part of the cylindrical outer surface 16a is prevented, so that temperature difference on the cylindrical outer surface 16a of the canister 16 is reduced. Consequently, temperature difference within the canister 16 is also reduced.

A longitudinal axis 16b of the canister 16 extends in an up and down direction of the vehicle. Preferably, said longitudinal axis 16b of the canister 16 is inclined to a vertical direction of the straddle-type vehicle within a range of 0 to 45 deg, with an upper part of the canister 16 directed to the forward direction of the straddle-type vehicle. With such arrangement, the canister 16 can be arranged within a free space between the frame, the engine 15 and the fuel tank 14.

According to a further embodiment (not illustrated), the canister is arranged in an up and down direction of the vehicle and inclined to a rear-direction of said vehicle. In particular, the longitudinal axis of the canister is arranged, for example, perpendicular with regard to the cylinder axis of the engine or within a respective range of, for example, ± 10 degrees with such direction. With the canister fixed to the body frame or the fuel tank, such condition relates to a neutral or a middle position of the swinging-type drive unit. With the canister attached to the swinging-type drive unit, said canister would follow the motion of said unit.

A body frame 4 is provided for supporting the engine 15, the fuel tank 14 and the seat 5. Said body frame 4 comprises left and right frame sections 11a, 11b extending in the longitudinal direction of the straddle-type vehicle and the fuel tank 14. The canister 16 is arranged between said left and right frame sections 11a, 11b. The canister 16 is fixed to one of said left and right frame sections. With such arrangement, the canister 16 is not exposed further to the outside of the vehicle and can be protected by means of the frame.

According to the embodiment, the engine 15 and the fuel tank 14 are arranged between said left and right frame sections 11a, 11b. With such arrangement, the respective elements can be protected and securely supported on the vehicle. According to a further embodiment (not illustrated), either the fuel tank or the engine is arranged between said left and right frame sections. For example, an alternative body frame may be provided without the left and right lower tubes in the vicinity of the fuel tank, so that only the upper tubes would be provided, and completely supports the fuel tank. According to a further alternative, the lower tubes would extend to the area of the canister only, and the upper and lower tubes would be connected to each other by means of a vertical tube section in the vicinity of the canister, so that the engine would not be covered by a lower tube section and can be easily reached for maintenance action.

The storage box 25 is arranged between the seat 5 and the engine 15. With such arrangement, the storage box is arranged above the engine 15 and on the rearward side, with regard to the fuel tank 14. Said storage box 25 also covers the canister 16 from the above, in order to further promote warm-up of the canister when the engine is running.

The bottom section of the storage box 25 covers the canister 16 from the above and said bottom section substantially extends from one side to the other side of the vehicle and overlaps the receptive frame means, especially the left and right upper tubes 12a and 12b.

The canister 16 and the engine 15 are overlapping in side view of the straddle-type vehicle. With such arrangement, the engine 15 and the canister 16 are placed side by side in the width direction of the vehicle so that no further space between the engine and the fuel tank is required in the longitudinal direction of the vehicle. Consequently, the fuel tank can be enlarged in the rearward direction as far as possible and increased in size so that storage capacity of the fuel is also increased.

A side cover covers the canister 16 from a side view so that warm air is kept within the respective free space. Said side cover can be easily removed so that the canister 16, the fuel tank 14 as well as the engine 15 can be easily reached for maintenance action.

A first pipe is connecting the fuel tank 14 and the canister 16, and a second pipe is connecting the canister 16 and an intake section if the engine 15. In consideration of the specific arrangement of the canister 16 within the vehicle, the first and second pipe can be made relatively short, which reduces costs. In particular, a short second pipe also reduces cool-down of released fuel vapour transmitted to the engine so that mixing of said fuel vapour with intake air is further promoted.

The first and second pipes are connected to an upper surface of the canister 16. With such arrangement, the respective connection pipes are arranged within the vehicle and are sufficiently protected.

## Claims

1. Straddle-type vehicle comprising: an engine (15), a fuel tank (14), and a canister (16) being connected with the fuel tank (14) and the engine (15), said engine (15) is arranged under a seat (5) of the vehicle, wherein said canister (16) is facing the engine (15), and an outer surface (16a) of said canister (16) is covered in a forward and/or upward direction of the straddle-type vehicle, the canister (16) and the engine (15) are overlapping in side view of the straddle-type vehicle, wherein said outer surface (16a) of the canister (16) is covered in a forward direction of the vehicle by means of the fuel tank (14).

2. Straddle-type vehicle according to claim 1, wherein said outer surface (16a) of the canister (16) is facing a rear wall (14a) of the fuel tank (14).

3. Straddle-type vehicle according to claim 2, wherein said canister (16) is arranged above a bottom edge (14b) of the rear wall (14a) of the fuel tank (14).

4. Straddle-type vehicle according to claim 2 or 3, wherein said engine (15) comprises a cylinder head (15b) directed in a forward direction of the vehicle and facing the rear wall (14a) of the fuel tank (14).

5. Straddle-type vehicle according to claim 4, wherein the cylinder head (15b) of the engine (15), the fuel tank (14), and the canister (16) are covered by a body cover.

6. Straddle-type vehicle according to at least one of claims 1 to 5, wherein said canister (16) has a cylindrical shape with a cylindrical outer surface (16a), part of said cylindrical outer surface (16a) is covered and part of said cylindrical outer surface (16a) is facing the engine (15).

7. Straddle-type vehicle according to claim 6, wherein a longitudinal axis (16b) of the canister (16) extends in an up and down direction of the vehicle, and preferably said longitudinal axis (16b) of the canister (16) is inclined to a vertical direction of the straddle-type vehicle within a range of 0 to 45 deg, with an upper part of the canister (16) directed to the forward direction of the straddle-type vehicle.

8. Straddle-type vehicle according to at least one of claims 1 to 7, wherein a body frame (4) is provided for supporting the engine (15), the fuel tank (14) and the seat (5), said body frame (4) comprises left and right frame sections (11a, 11b) extending in the longitudinal direction of the straddle-type vehicle and the fuel tank (14), wherein the canister (16) is arranged between said left and right frame sections (11a, 11b).

9. Straddle-type vehicle according to claim 8, wherein the canister (16) is fixed to one of said left and right frame sections.

10. Straddle-type vehicle according to claim 8 or 9, wherein the engine (15) and/or the fuel tank (14) is arranged between said left and right frame sections (11a, 11b).

11. Straddle-type vehicle according to at least one of claims 1 to 10, wherein a storage box (25) is arranged between the seat (5) and the engine (15), said storage box (25) is arranged above the canister (16).

12. Straddle-type vehicle according to at least one of claims 1 to 11, wherein the canister (16) is arranged between the engine (15) and a side cover in side view of the straddle-type vehicle.

13. Straddle-type vehicle according to at least one of claims 1 to 12, wherein a first pipe is connecting the fuel tank (14) and the canister (16), and a second pipe is connecting the canister (16) and an intake section of the engine (15).

14. Straddle-type vehicle according to claim 13, wherein the first and second pipe are connected to an upper surface of the canister (16).

## Patentansprüche

1. Spreizsitzt-Typ-Fahrzeug das umfasst: einen Motor (15), einen Kraftstoff-Tank (14), und einen Kanister (16), der mit dem Kraftstoff-Tank (14) und dem Motor (15) verbunden ist, dieser Motor (15) ist unter einem Sitz (5) von dem Fahrzeug angeordnet, wobei dieser Kanister dem Motor (15) zugewandt ist, und eine Außen-Fläche (16a) von diesem Kanister (16) ist in einer Vorwärts- und/oder AufwärtsRichtung von dem Spreizsitzt-Typ-Fahrzeug abgedeckt, der Kanister (16) und der Motor (15) überlappen in Seiten-Ansicht von dem Spreizsitzt-Typ-Fahrzeug, wobei diese Außen-Fläche (16a) von dem Kanister (16) in einer Vorwärts-Richtung von dem Fahrzeug durch den Kraftstoff-Tank (14) abgedeckt ist.

2. Spreizsitzt-Typ-Fahrzeug gemäß zu Anspruch 1, wobei diese Außen-Fläche (16a) von dem Kanister einer Rück-Wand (14a) von dem Kraftstoff-Tank (14) zugewandt ist.

3. Spreizsitzt-Typ-Fahrzeug gemäß zu Anspruch 2, wobei dieser Kanister (16) oberhalb von einer Boden-Kante (14b) von der Rück-Wand (14a) von dem Kraftstoff-Tank (14) angeordnet ist.

4. Spreizsitzt-Typ-Fahrzeug gemäß zu Anspruch 2 oder 3, wobei dieser Motor (15) einen Zylinder-Kopf (15b) umfasst, der in einer Vorwärts-Richtung von dem Fahrzeug gerichtet ist, und der Rück-Wand (14a) von dem Kraftstoff-Tank (14) zugewandt ist.

5. Spreizsitzt-Typ-Fahrzeug gemäß zu Anspruch 4, wobei der Zylinder-Kopf (15b) von dem Motor (15), der Kraftstoff-Tank (14), und der Kanister (16) durch eine Körper-Abdeckung abgedeckt sind.

6. Spreizsitzt-Typ-Fahrzeug gemäß zumindest einem von den Ansprüchen 1 bis 5, wobei dieser Kanister (16) eine zylindrische Form hat, mit einer zylindrischen Außen-Fläche (16a), ein Teil von dieser zylindrischen Außen-Fläche (16a) ist abgedeckt, und ein Teil von dieser zylindrischen Außen-Fläche (16a) ist dem Motor (15) zugewandt.

7. Spreizsitzt-Typ-Fahrzeug gemäß zu Anspruch 6, wobei eine Längs-Achse (16b) von dem Kanister (16) sich in einer Oben- und Unten-Richtung von dem Fahrzeug erstreckt, und vorzugsweise ist diese Längs-Achse (16b) von dem Kanister (16) zu einer Vertikal-Richtung von dem Spreizsitzt-Typ-Fahrzeug in einem Bereich von 0 bis 45 Grad geneigt, mit einem oberen Teil von dem Kanister (16) gerichtet in die Vorwärts-Richtung von dem Spreizsitzt-Typ-Fahrzeug.

8. Spreizsitzt-Typ-Fahrzeug gemäß zumindest einem der Ansprüche 1 bis 7, wobei ein Körper-Rahmen (4) zum Lagern des Motors (15), des Kraftstoff-Tanks (14) und des Sitzes (5) vorgesehen ist, dieser Körper-Rahmen (4) umfasst linke und rechte Rahmen-Abschnitte (11a, 11b), die sich in der Längs-Richtung von dem Spreizsitzt-Typ-Fahrzeug und dem Kraftstoff-Tank (14) erstrecken, wobei der Kanister (16) zwischen diesen linken und rechten Rahmen-Abschnitten (11a, 11b) angeordnet ist.

9. Spreizsitzt-Typ-Fahrzeug gemäß zu Anspruch 8, wobei der Kanister (16) an einem von den linken und rechten Rahmen-Abschnitten fixiert ist.

10. Spreizsitzt-Typ-Fahrzeug gemäß zu Anspruch 8 oder 9, wobei der Motor (15) und/oder der Kraftstoff-Tank (14) zwischen diesen linken und rechten Rahmen-Abschnitten (11a, 11b) angeordnet ist.

11. Spreizsitzt-Typ-Fahrzeug gemäß zumindest einem der Ansprüche 1 bis 10, wobei ein Stau-Kasten (25) zwischen dem Sitz (5) und dem Motor (15) angeordnet ist, dieser Stau-Kasten (25) ist oberhalb des Kanisters (16) angeordnet.

12. Spreizsitzt-Typ-Fahrzeug gemäß zumindest einem der Ansprüche 1 bis 11, wobei der Kanister (16) zwischen dem Motor (15) und einer Seiten-Abdeckung in einer Seiten-Ansicht von dem Spreizsitzt-Typ-Fahrzeug angeordnet ist.

13. Spreizsitzt-Typ-Fahrzeug gemäß zumindest einem der Ansprüche 1 bis 12, wobei eine erste Leitung den Kraftstoff-Tank und den Kanister (16) verbindet, und eine zweite Leitung den Kanister (16) und einen Einlass-Abschnitt von dem Motor (15) verbindet.

14. Spreizsitzt-Typ-Fahrzeug gemäß zu Anspruch 13, wobei die erste und zweite Leitung an einer oberen Fläche von dem Kanister (16) verbunden sind.

## Revendications

1. Véhicule de type à selle comprenant : un moteur (15), un réservoir de carburant (14) et une cartouche (16) reliée avec le réservoir de carburant (14) et le moteur (15), ledit moteur (15) étant disposé sur le siège (5) du véhicule, ladite cartouche (16) faisant face au moteur (15), et la surface externe (16a) de ladite cartouche (16) étant recouverte dans la direction vers l'avant et/ou vers le haut du véhicule de type à selle, la cartouche (16) et le moteur (15) se chevauchant dans une vue latérale du véhicule de type à selle, ladite surface externe (16a) de la cartouche (16) étant recouverte dans la direction vers l'avant du véhicule par l'intermédiaire du réservoir de carburant (14).

2. Véhicule de type à selle selon la revendication 1, dans lequel ladite surface externe (16a) de la cartouche (16) fait face à la paroi arrière (14a) du réservoir de carburant (14).

3. Véhicule de type à selle selon la revendication 2, dans lequel ladite cartouche (16) est disposée au-dessus de la bordure inférieure (14b) du réservoir de carburant (14).

4. Véhicule de type à selle selon la revendication 2 ou la revendication 3, dans lequel ledit moteur (15) comprend une culasse (15b) dirigée dans la direction vers l'avant du véhicule et faisant face à la paroi arrière (14a) du réservoir de carburant (14).

5. Véhicule de type à selle selon la revendication 4, dans lequel la culasse (15b) du moteur (15) et la cartouche (16) sont recouvertes par un carénage.

6. Véhicule de type à selle selon au moins l'une des revendications 1 à 5, dans lequel ladite cartouche (16) présente une forme cylindrique comportant une surface externe (16a) cylindrique, où une partie de ladite surface externe (16a) cylindrique est recouverte et une partie de ladite surface externe (16a) cylindrique fait face au moteur (15) .

7. Véhicule de type à selle selon la revendication 6, dans lequel l'axe longitudinal (16b) de la cartouche (16) s'étend dans la direction haut bas du véhicule, et ledit axe longitudinal (16b) de la cartouche (16) est de préférence incliné vers la direction verticale du véhicule de type à selle dans une plage allant de 0 degré à 45 degrés, la partie supérieure de la cartouche (16) étant dirigée vers la direction vers l'avant du véhicule de type à selle.

8. Véhicule de type à selle selon au moins l'une des revendications 1 à 7, dans lequel un cadre (4) est agencé pour supporter le moteur (15), le réservoir de carburant (14) et le siège (5), ledit cadre (4) comprenant des sections de cadre gauche et droite (11a, 11b) qui s'étendent dans la direction longitudinale du véhicule de type à selle et du réservoir de carburant (14), la cartouche (16) étant agencée entre lesdites sections de cadre gauche et droite (11a, 11b).

9. Véhicule de type à selle selon la revendication 8, dans lequel la cartouche (16) est fixée à l'une desdites sections de cadre gauche et droite.

10. Véhicule de type à selle selon la revendication 8 ou la revendication 9, dans lequel le moteur (15) et/ou le réservoir de carburant (14) sont agencés entre lesdites sections de cadre gauche et droite (11a, 11b).

11. Véhicule de type à selle selon au moins l'une des revendications 1 à 10, dans lequel un casier de stockage (25) est agencé entre le siège (5) et le moteur (15), ledit casier de stockage (25) étant disposé au-dessus de la cartouche (16).

12. Véhicule de type à selle selon au moins l'une des revendications 1 à 11, dans lequel la cartouche (16) est agencée entre le moteur (15) et un carter latéral dans une vue latérale du véhicule de type à selle.

13. Véhicule de type à selle selon au moins l'une des revendications 1 à 12, dans lequel un premier tuyau relie le réservoir de carburant (14) et la cartouche (16) et un second tuyau relie la cartouche (16) et une section d'admission du moteur (15).

14. Véhicule de type à selle selon la revendication 13, dans lequel le premier et le second tuyau sont reliés à la surface supérieure de la cartouche (16).
